# EUROPEAN PATENT APPLICATION

(11) **EP 2 698 528 A1**
(43) Date of publication of application: **19.02.2014**
(21) Application number: 11863488.0
(22) Date of filing: 14.04.2011
(51) Int. Cl.: F03D 1/00

(54) **REPAIR/CLEANING SCAFFOLDING TOWER FOR WIND TURBINES**

(71) Applicant: Mantenimientos Eléctricos Campo de Aviación, S.L., 18200 Macarena, Granada (ES)
(72) Inventor: OLEA PORCEL, Francisco, C.P. 18200 Maraceba, Granada (ES); AVILA ESPIGARES, José Antonio, C.P. 18101 Purchil, Granada (ES)
(74) Representative: Carlos Hernando, Borja
(86) International application number: PCT/ES2011/000134
(87) International publication number: WO 2012/140278

(57) **Abstract**

The invention relates to a repair/cleaning scaffolding tower for wind turbines, having an open and closed metal structure that is semi-automatic, including a robotic arm that supports a variable shape basket, with between three and an infinite number of sides depending on requirements. The basket includes a safety device allowing the same to be removed immediately from the path of the blades. In addition to the robotic arm, the invention includes an L-shaped structural piece that supports a gangway used for maintaining the gondola. The repair/cleaning scaffolding tower includes a ring clamp with a gangway for maintaining the mast tower and several ring clamps without a gangway for stabilising the scaffolding tower.

## Description

### Technical field

The present invention falls within field of the technical method through which maintenance, repair and cleaning work, in addition to all other necessary works to be carried out on the blades of wind turbines, may be effectuated, via a basket that will carry the specific elements and devices needed for each job, as well as the technicians who will use them, if necessary.

This basket is joined to a robotic arm, which is located inside a structural element, responsible for moving the robotic arm through the scaffolding tower.

Furthermore, owing to the new accessories built into the scaffolding tower, for example the ring clamp with a gangway and without a gangway and the basket in the new robotic arm coupling, it is possible to carry out all necessary works on the mast and gondola of the turbine, respectively.

### State of the art

Owing to the need to maintain the blades of wind turbines in optimal condition and given the high cost of repairing them in general, we believe that the technique described following a description of the current technique is necessary.

Currently, various methods through which maintenance, repair and cleaning works are carried out on the blade of wind turbines are known about.

Once the decision to repair, maintain or clean the blade has been taken, the blade is lowered to the floor, using various high load capacity cranes, which must reach from the base of the turbine to the blade anchoring, in order to detach it from the turbine rotor.

It is clear that this process is carried out after having stopped said turbine in order to lower the blade to the ground.

Moreover, the work must be carried out at high dismounting and mounting costs, as well as the high cost of renting the cranes and likewise of preparing for reduced energy production in the turbine. Once the blade has been repaired, replaced or cleaned on the ground according to the fault found, the average time it is used in this process (depending on the problem) varies between 5 and 14 days. Therefore, the loss of time and material required in such works is high, when compared to the method carried out according to our present invention.

We therefore also adapt these new accessories to maintain the mast and gondola of the turbine in optimal conditions.

Using our present invention, the techniques used to carry out the appropriate works to resolve the various faults found (not counting reduction of possible associated risks caused by not having taken preventative maintenance work measures) are transferred, resulting in a notable cost reduction, given the greater output per hour of the turbine, since it does not have to be inactive for such a long time.

### Description of the invention

The present inventions corresponds to an innovative system that serves to facilitate any kind of work being carried out on the blades of wind turbines, without the same having to be lowered to the ground in order to effectuate said works.

The new system, known as a repair/cleaning scaffolding tower for wind turbines, is able to carry out these maintenance and repair works on the blades, provided that the same is located near to the tower of the wind turbine, as described below.

Moreover, adapting the new accessories to the repair/cleaning scaffolding tower allows us to maintain and repair the mast as well as the gondola of the turbine.

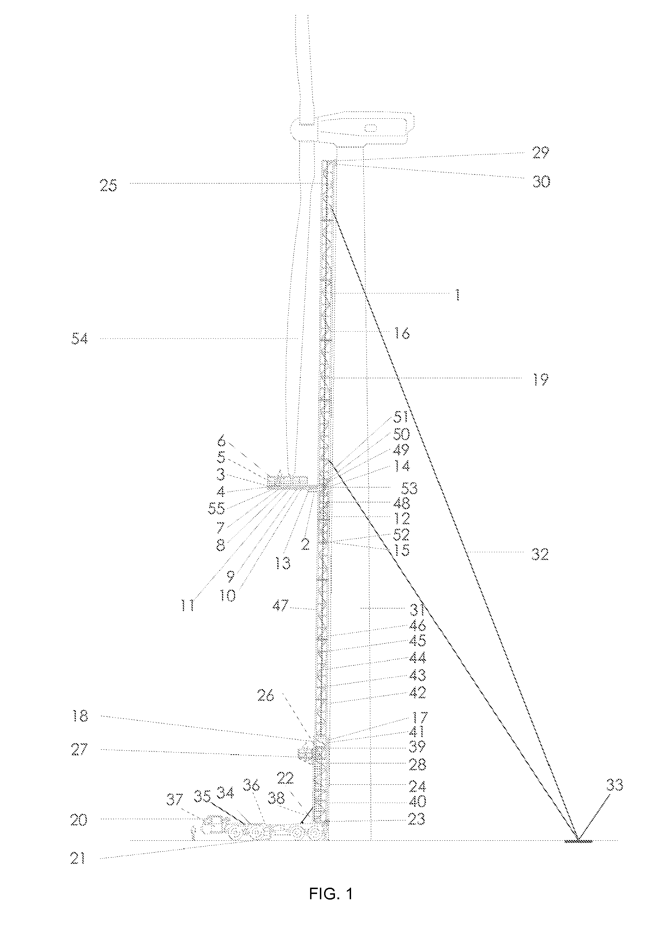

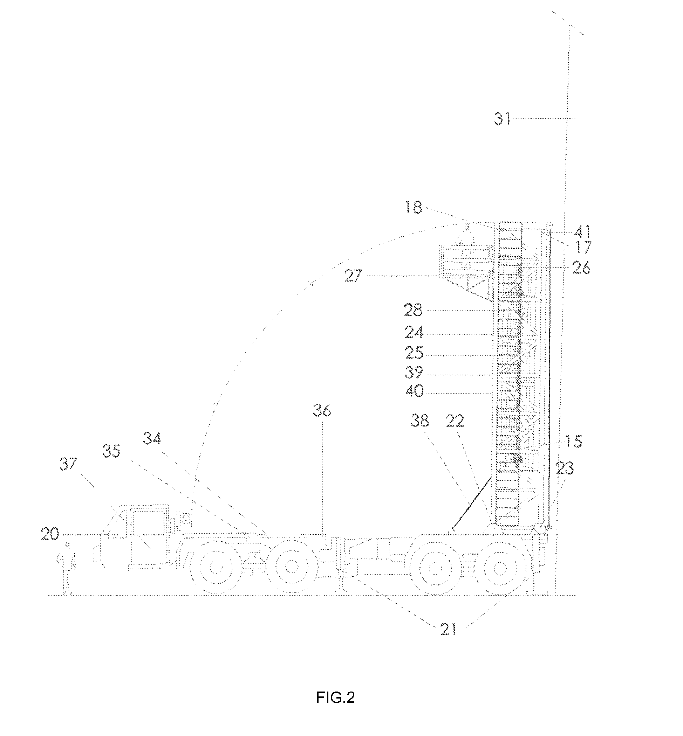

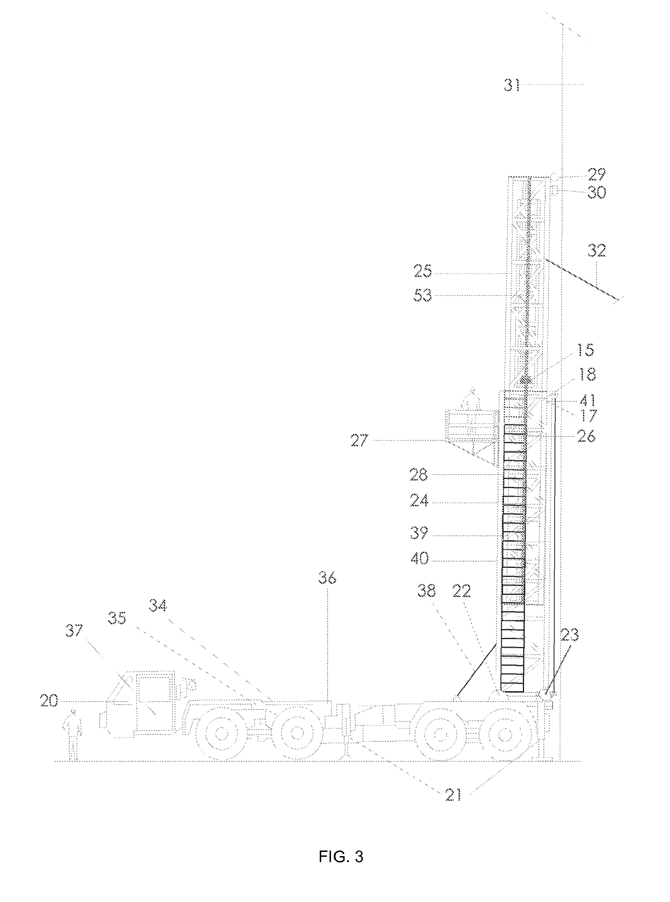

The base (24) (Figs. 2, 3 and 4) of the scaffolding tower (1) (Fig. 1) is located on a special lorry (20) (Figs. 2 and 3), this lorry (20) (Figs. 2 and 3) having the following characteristics:

It has a hydraulic levelling system (21) (Figs. 2 and 3), which consists of a number of extendable arms which come out of the structure of the lorry (20) itself (Figs. 2 and 3), which should be supported on solid ground, in order to achieve complete stability in the lorry (20) (Figs. 2 and 3), carrying the first stretch (25) (Fig. 3) of the scaffolding tower (1) (Fig. 1).

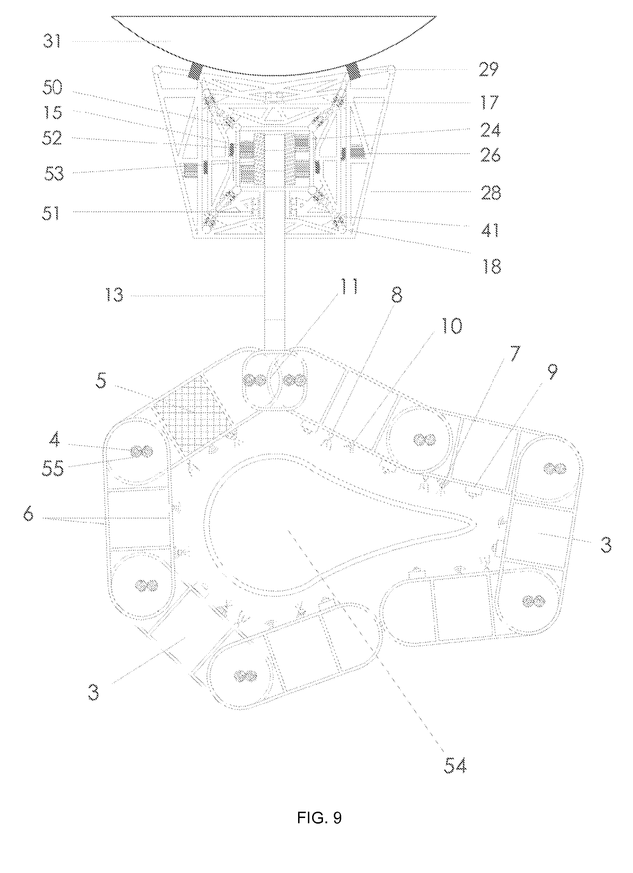

In order to carry out the works, this lorry (20) (Figs. 2 and 3) is equipped with a 7500 litre water deposit (34) (Figs. 2 and 3), a pressure lofter (35) (Figs. 2 and 3) and a power generator (36) (Figs. 2 and 3) for powering the electric system needed to carry out cleaning works on the blades (54) (Figs.9, 10 and 11). In addition, it has a television circuit and a scanner system (37) (Figs. 2 and 3) for visualising the blades (54) (Fig. 9), all of which is stored in a built-in computer circuit, in which it will be recorded onto the hard disc, in order to subsequently individualize it on its disc, which will be stored with a turbine number, the location of the turbine (in UTM coordinates) and the day on which the work was carried out.

The base (24) (Figs. 2, 3 and 4) of the scaffolding tower (1) (Fig. 1) is mounted via a shaft onto a fork (22) (Figs 2 and 3), which is fixed and joined to the chassis of the lorry (20) (Figs. 2 and 3).

This fork (22) (Figs. 2 and 3), upon which the base (24) (Figs. 2, 3 and 4) of the scaffolding tower (1) (Fig. 1) rotates, is lifted by means of a rotating pulley system (23) (Figs. 2 and 3), which are motorised and leant back onto the chassis of the lorry (20) (Figs. 2 and 3) and onto the base (24) (Figs. 2, 3 and 4) of the scaffolding tower (1) (Fig.1) until they are aligned vertically.

The base (24) (Figs. 2, 3 and 4) of the scaffolding tower (1) (Fig. 1) has a dampening system (38) (Figs. 2 and 3) in order to make the rotating pulley system (23) (Figs. 2 and 3) brake, so that it is blocked when it has reached its working position.

The base (24) (Figs. 2, 3 and 4) of the scaffolding tower (1) (Fig. 1) will reach its working position when it comes into contact with the mast of the turbine (31) (Figs. 1, 2, 3 and 5).

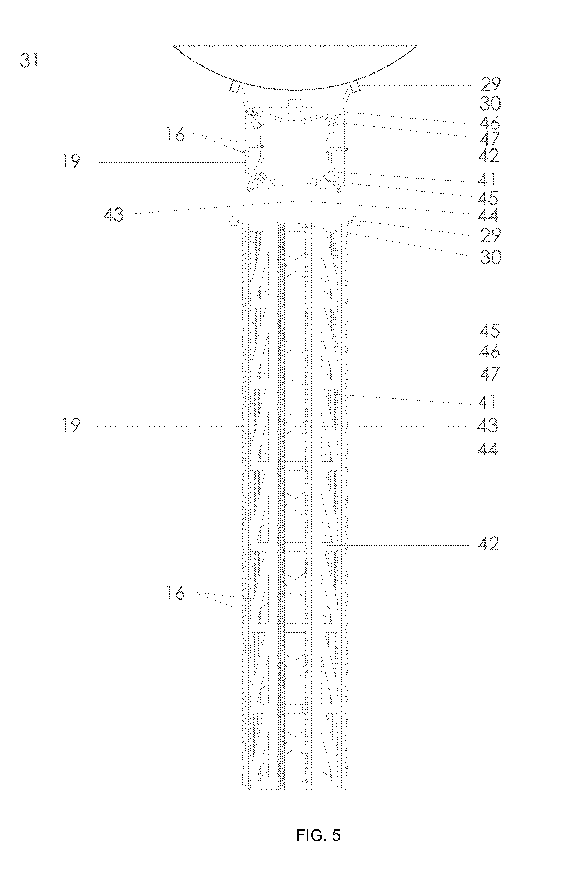

This contact is achieved by means of a number of rubberized wheels (29) (Figs. 1 and 5), which are located in the upper portion of the first stretch (25) (Fig. 3) of the scaffolding tower (1) (Fig. 1), these wheels being placed with a certain degree of rotation in order to embrace the mast of the turbine (31) (Fig. 1).

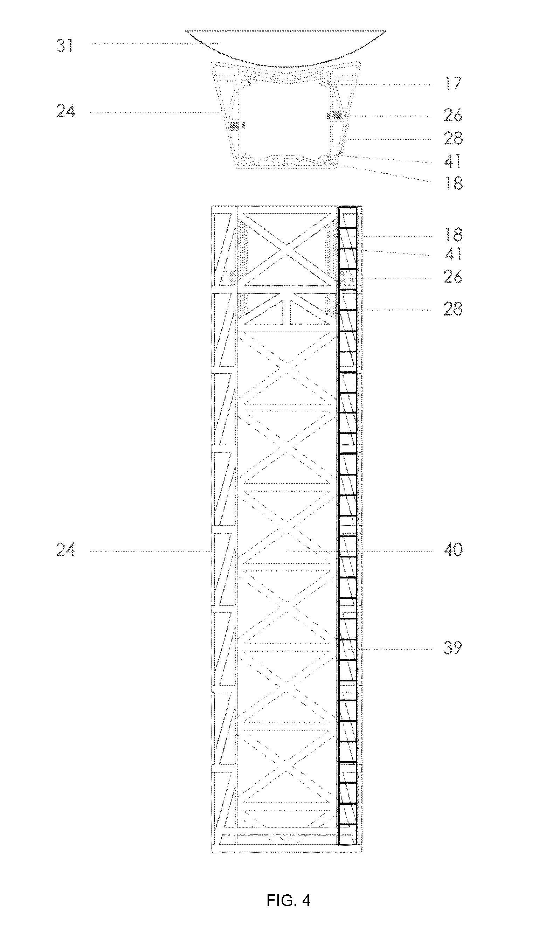

The base (24) (Figs. 1, 2, 3, 4 and 5) of the scaffolding tower (1) (Fig.1) is formed by a stretch of metal structure 10 meters high, the 2 final meters of the base (24) (Figs. 2, 3 and 4) of the scaffolding tower (1) (Fig. 1) being closed (39) (Fig.4) on all of its sides or wings. However, the 8 remaining meters are open (40) (Fig. 4) at one of its wings (the various stretches (19) (Fig.5) that form the scaffolding tower (1) (Fig.1) being introduced through this opening).

Externally in the last two closed meters of the base (24) (Figs. 2, 3 and 4) of the scaffolding tower (1) (Fig.1), a fixed platform (27) (Figs. 2 and 3) will be fitted, which is accessed by means of a safety ladder (28) (Figs. 2, 3 and 4) installed in the wing of the base (24) (Figs. 2, 3 and 4) of the scaffolding tower (1) (Fig.1), this fixed platform (27) (Figs. 2 and 3) serving to facilitate the assembly and mounting of all the components of the scaffolding tower (1) (Fig.1).

The inner corners of the base (24) (Figs. 2, 3 and 4) of the scaffolding tower (1) (Fig. 1) are cylindrical (18) (Fig. 4) in structure, so that the 12 convex guide wheels (17) (Fig.4) coupled to the corners of the base (24) (Figs. 2, 3 and 4) of the scaffolding tower (1) (Fig. 1) are able to rotate on them, these wheels being fastened by means of a rectangular structure (41) (Fig.4), with three in each corner. These wheels will serve to help the gear motors (26) (Fig.4) to move the internal mounting stretches (19) (Fig.5).

The metal stretches (19) (Fig.5) of the scaffolding tower (1) are introduced through the base (24) (Figs.2,3,and 4) of the scaffolding tower (1) (Fig.1) in order to be subsequently hoisted by means of four gear motors (26) (Fig.4), which are located in the upper portion of the base (24) (Figs. 2, 3 and 4) of the scaffolding tower (1) (Fig. 1), housed precisely within the two wings adjacent to the open area of the base (24) (Figs. 2, 3 and 4) of the scaffolding tower (1) (Fig. 1).

These stretches (19) (Fig. 5) of the scaffolding tower (1) shall be hoisted by the motors (26) (Fig. 4) located in the head of the base (24) (Figs. 2, 3 and 4) of the scaffolding tower (1) (Fig. 1) by means of the zip system (16) (Fig. 5).

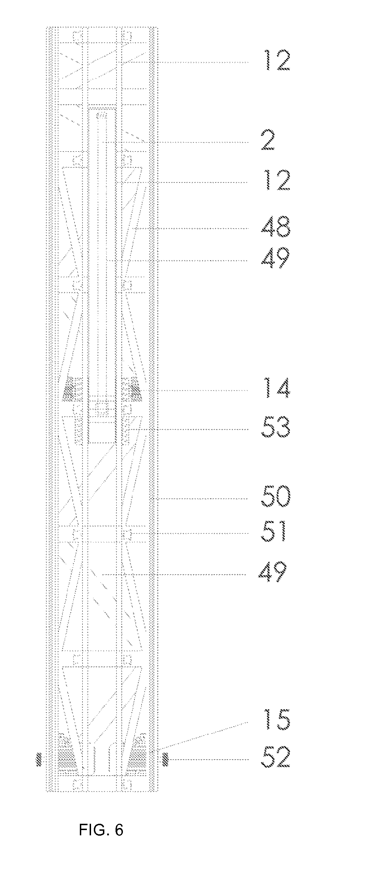

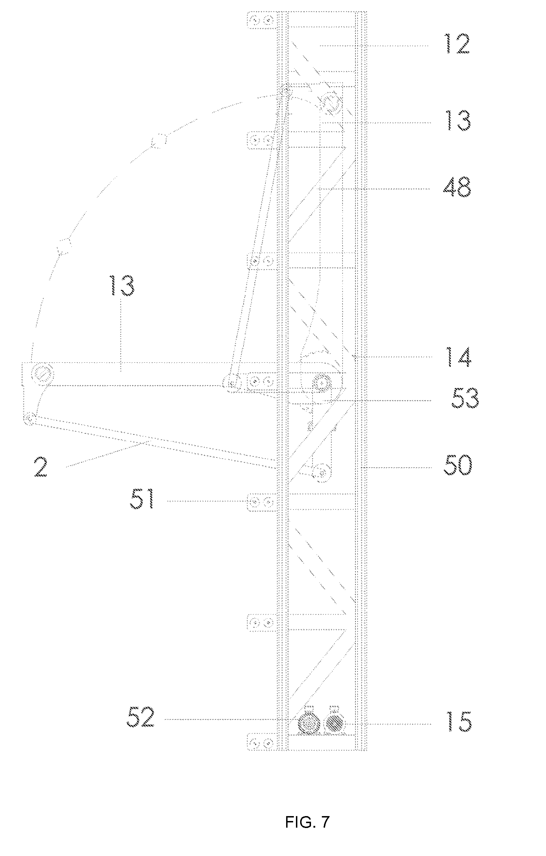

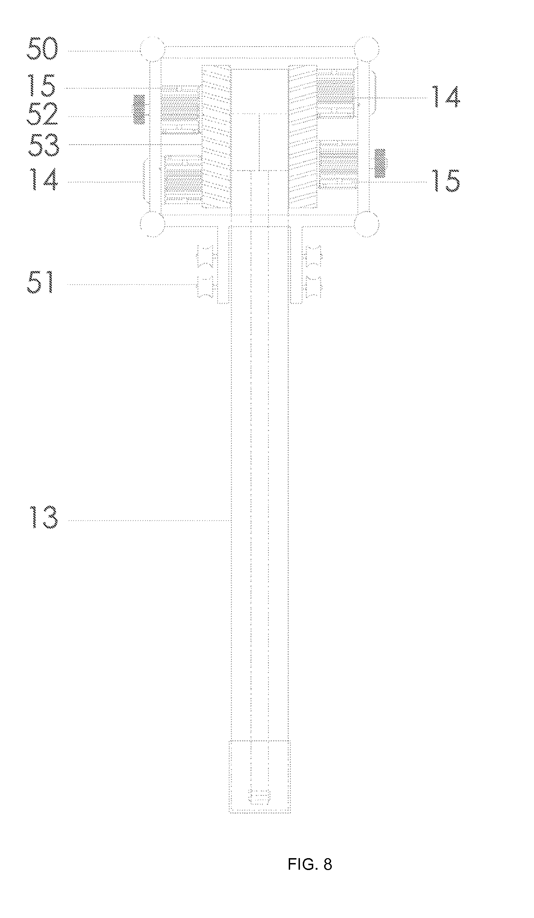

The stretches (19) (Fig. 5), which are introduced in the base (24) (Figs. 2, 3 and 4) of the scaffolding tower (1) (Fig. 1), just like the base (24) (Figs. 2, 3 and 4) of the scaffolding tower (1) (Fig. 1), are formed by a metal quadrangular structure, which measures 7.5 meters in height and is closed (42) (Fig.5) at three of its sides, being part of an open wing (43) (Fig. 5). At the ends of these wings are cylindrical tubes (44) (Fig.5), which facilitate passage and help us to make the structure of the scaffolding tower (1) (Fig. 1) rigid, at the working stage of the displacement system (12) (Fig. 6) of the robotic arm (13) (Figs. 7 and 8).

The inner (45) (Fig.5) and outer (46) (Fig. 5) corners of these stretches are cylindrical in structure. The external (46) (Fig. 5) cylindrical corners serve to facilitate the rotation of the 12 convex wheels (17) (Fig. 4) on them, which are coupled to the corners of the base (24) (Figs. 2, 3 and 4) of the scaffolding tower (1) (Fig. 1), which are coupled to a rectangular structure.

The stretches (19) (Fig. 5) introduced have a double zip (16) (Fig.5) inserted into the left and right wings, which is what shall be used to elevate them.

In addition, these stretches (19) (Fig. 5), have an internal zip (16) (Fig. 5) in their left and right wings, which serves to facilitate the internal movement of the displacement structure (12) (Fig. 6) of the robotic arm (13) (Figs. 7 and 8).

The first stretch (25) (Fig. 3), which shall be hoisted by the inside of the base (24) (Figs. 2, 3 and 4) of the scaffolding tower (1) (Fig. 1), is already located inside the same (Figs. 2 and 3).

In the upper portion of this first stretch (25) (Fig. 3), two rubberized wheels (29) (Figs. 1 and 5) will be coupled externally, fitted with a degree of rotation in order to embrace the mast of the turbine (31) (Fig. 1) and an electromagnet (30) (Figs. 1 and 5) for coupling to the turbine tower (31) (Fig. 1).

In turn, the structural displacement stretch (12) (Fig. 6) of the robotic arm (13) (Figs. 7 and 8) is built into this first stretch (25) (Fig. 3), with the same included.

The structural displacement stretch (12) (Fig. 6) of the robotic arm (13) (Figs. 7 and 8) is composed of a quadrangular metal structure, which is 6 meters in height, the first 2 meters and the final meter of the stretch of the structural displacement element (12) (Fig. 6) being closed (48) (Fig. 6) on all sides. However, the 3 remaining meters are open (49) (Fig. 6) at one of their ends, the robotic arm (13) (Figs. 7 and 8) which supports the basket (11) (Figs. 9, 10 and 11) therefore being able to move.

The corners of the structural displacement stretch (12) (Fig. 6) of the robotic arm (13) (Figs. 7 and 8) are cylindrical in form (50) (Fig. 8) and serve to enable the 12 convex wheels (47) (Fig. 5) to rotate on them, with the corners of all the stretches (19) (Fig. 5) which form the scaffolding tower (1) (Fig 1) being coupled to them, therefore facilitating the displacement of the stretch carrying the robotic arm (13) (Figs. 7 and 8) inside the scaffolding tower (1) (Fig. 1).

These 12 internal wheels (47) (Fig. 5) are shared between the four internal corners of each stretch (47) (Fig. 5) of the scaffolding tower (1) (Fig. 1) equally, i.e. there are three wheels (47) (Fig. 5) per corner of each stretch (19) (Fig. 5) of the scaffolding tower (1) (Fig. 1).

The structural displacement stretch (12) (Fig. 6) with the robotic arm (13) (Figs. 7 and 8), upon being inside the first mounting stretch (25) (Fig. 3) of the base (24) (Figs. 2, 3 and 4) of the scaffolding tower (1) (Fig. 1) shall be raised to an equal height with stretches (19) (Fig. 3) coupled by the lower portion of the base (24) (Figs. 2, 3 and 4) of the scaffolding tower (1) (Fig. 1) until they reach the desired height (Fig. 1).

Once the scaffolding tower (1) (Fig.1) has reached the desired working height (Fig. 1) the structural displacement stretch (12) (Fig. 6) with the robotic arm (13) (Figs. 7 and 8) will be lowered down to the head of the base (24) (Figs. 2, 3 and 4) of the scaffolding tower (1) (Fig. 1).

The stretches (19) (Fig. 5) of the scaffolding tower (1) (Fig. 1) will have the vents (32) (Fig. 1), rubberized wheels (29) (Figs. 1 and 5) and electromagnets (30) (Figs. 1 and 5) needed to provide stable and safe working conditions. These vents (32) (Fig. 1), just like the rubberised wheels (29) (Figs. 1 and 5) and electromagnets (30) (Figs. 1 and 5) will be mounted in unison with the hoisting of the scaffolding tower (1) (Fig. 1). The vents (32) (Fig. 1) were previously fixed to a hydraulic turbine system with operating voltage, which is fixed to the ground by means of foundations, used to anchor the vents (33) (Fig. 1), before lowering the robotic arm (13) (Figs. 7 and 8).

The structural displacement stretch (12) (Fig. 6) is moved by means of two gear motors (15) (Figs. 6, 7 and 8), which are coupled to the structure of this stretch. The gear motors (15) (Figs. 6, 7 and 8) with a number of built in crowns (52) (Figs. 6, 7 and 8) will be responsible for moving the scaffolding tower (1) (Fig. 1) using the zips (16) (Fig. 5) in the stretches (19) (Fig. 5).

The structural displacement system (12) (Fig. 6) of the robotic arm (13) (Figs. 7 and 8) has a built in structure with rotating wheels (51) (Fig. 8) which will be embraced and moved by the external cylindrical tubes (44) (Fig. 5) of the open portion (43) (Fig. 5) of the scaffolding tower (1) (Fig. 1), thereby achieving rigid working conditions in both the tower and the robotic arm (13) (Figs. 7 and 8).

Once located in the upper portion of the base (24) (Figs. 2, 3 and 4) of the scaffolding tower (1) (Fig. 1), the robotic arm (13) (Figs. 7 and 8) is fitted in horizontal position in order for the operational basket (11) (Figs. 9, 10 and 11) to couple it.

The robotic arm (13) (Figs. 7 and 8) may carry out vertical displacement manoeuvres owing to its toothed crowns in the rotation system (Figs. 6, 7 and 8) inside the displacement structure (12) (Fig. 6), which is joined to this arm (13), this crown of the rotating system (53) (Figs. 7, 8 and 9) carrying out its movements via two gear motors (14) (Figs. 6 and 8) with a brake which transmit their energy by means of crowns.

This robotic arm (13) (Figs. 7 and 8) and the crown of the rotation system (53) (Figs. 6, 7 and 8) for movement have a built in automatic levelling cam system (2) (Fig. 7) to ensure the basket (11) (Fig. 9) is always horizontal, this basket being joined to this robotic arm (13) (Figs. 7 and 8).

The basket (11) (Fig. 9) which is joined to the robotic arm (13) (Figs. 7 and 8) is a metal structure composed of various stretches (3) (Fig. 9) coupled to one another by means of conical bearings (4) (Fig. 9) and crowns for rotation (55) (Fig. 9). It may also adopt any shape or form required to carry out the works (Figs. 9, 10 and 11).

These variable form metal stretches (3) (Figs. 9, 10 and 11) have a gangway (5) (Fig. 9) to step on and a safety rail (6) (Fig. 9) and admit various supports for the installation of their various applications, for example:
- Cleaning system (7) (Fig.9)
- Scanning system (8) (Fig.9)
- Photography system (9) (Fig.9)
- General repairs.

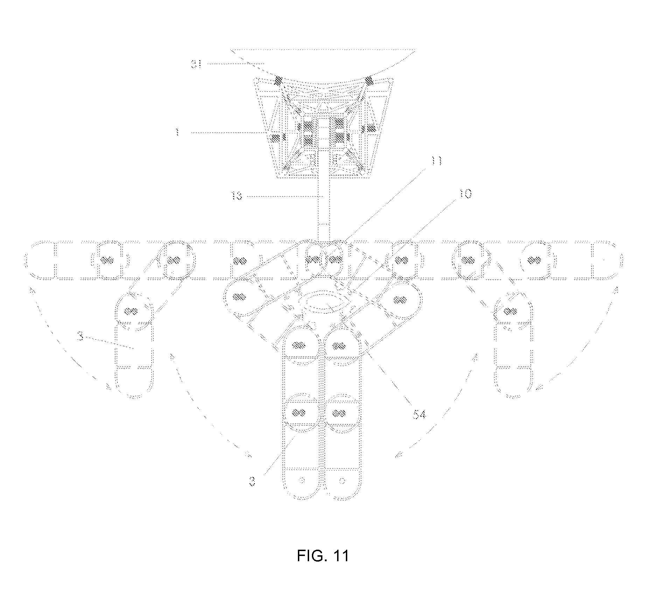

The basket (11) (Figs. 9, 10 and 11) also have a semi-automatic manual system with security sensors (10) (Fig. 9) so as not to damage the blades (54) (Figs. 9, 10 and 11) of the turbine. Likewise, the safety of the workers is considered a priority, given that should any circumstance arise or there be any reason for them having to move the basket (11) (Fig. 11) (from where they work) from the blades' (54) (Fig. 11) path, they could do so quickly and in the most effective way according to the circumstances.

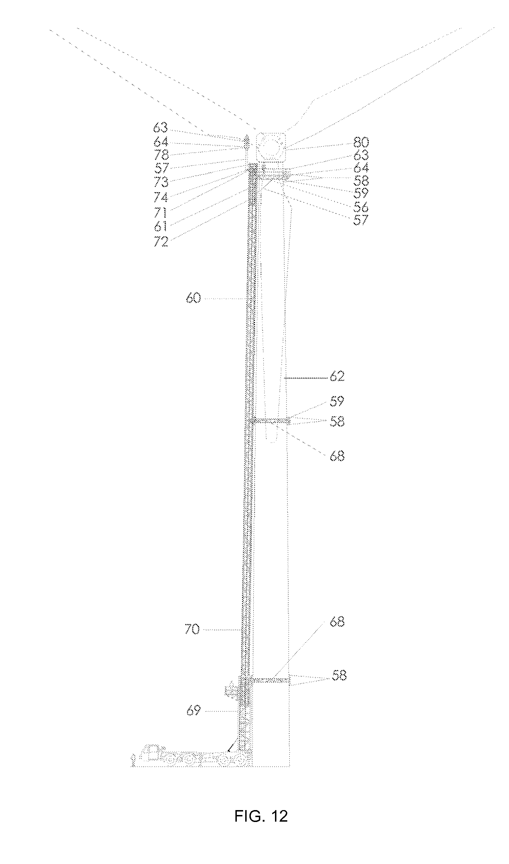

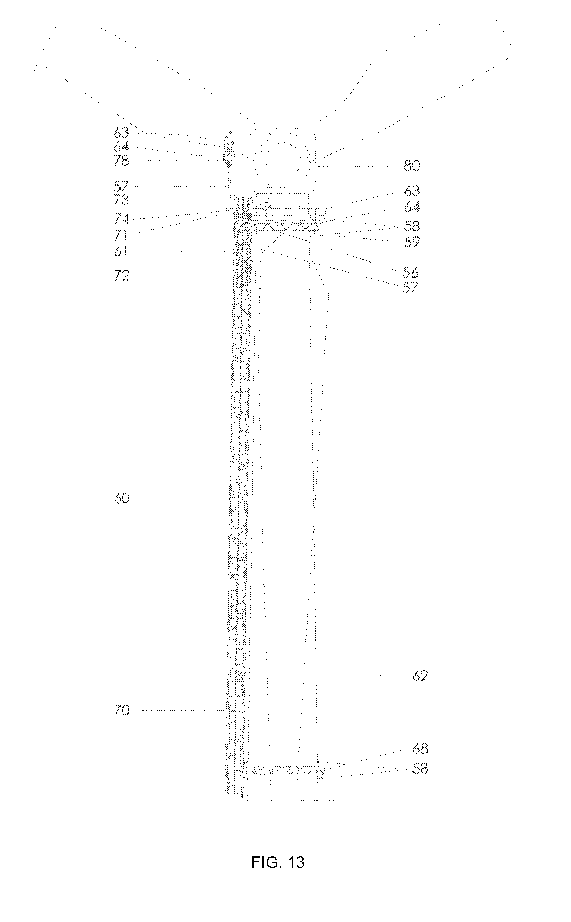

One of the new accessories built into the scaffolding tower (60) (Fig. 12) is the ring clamp with a gangway (56) (Figs. 12, 13 and 14), which is built into the first stretch (61) (Figs 12 and 13) of the scaffolding tower (60) (Fig. 12). It is formed by two symmetrical variable form metal structures, which are coupled in parallel to the perimeter of the mast tower (62) (Fig. 12) of the turbine. The same also have a number of joints and bracing (57) (Figs. 12, 13 and 14), thereby achieving the maximum stability and security thereof.

The structure of the ring clamp with a gangway (56) (Figs. 12, 13 and 14) has a number of rubberised wheels (58) (Figs. 12, 13 and 14), fitted in the upper and lower portion of the same. The wheels have a pneumatic system controlled by a pressure regulator (59), (Figs. 12 and 13) used to achieve balance and stability in the scaffolding tower (60) (Fig. 12) as it moves the auto-mounting on the mast tower (62) (Fig. 12) in order to reach their various working positions.

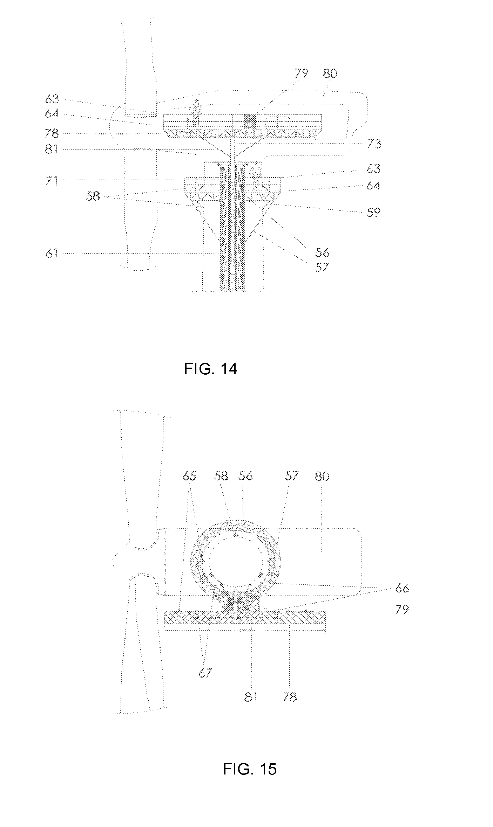

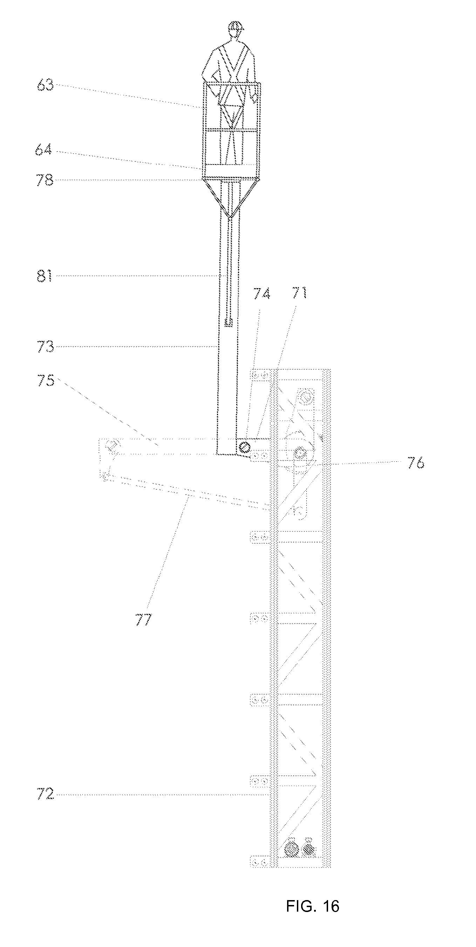

The structure of the ring clamp with a gangway (56) (Figs. 12, 13 and 14) to be stepped on also has railings (63) (Figs. 12 and 13), safety skirting's (64) (Figs. 12 and 13) and the various supports for the installation of the various systems:
- Cleaning system (65) (Fig. 14), scanning system (66) (Fig. 14), photography system (67) (Fig. 14) and general repair system.

Another new accessory for the scaffolding tower is the ring clamps without a gangway (68) (Fig. 12), which are built into the upper portion of the base (69) (Fig. 12) of the scaffolding tower (60) (Fig. 12) and into a number of stretches (70) (Fig. 12) of the same, are necessary. This accessory is formed by two symmetrical variable form metal structures, which are coupled parallel to the perimeter of the mast tower (62) (Fig. 12) of the turbine.

The ring clamp structure (68) (Fig. 12) has a number of rubberised wheels (58) (Fig. 12) fitted in the upper and lower portion of the same. The wheels have a pneumatic system (59) (Fig. 12) controlled by a pressure regulator, in order to achieve balance and stability in the scaffolding tower (60) (Fig. 12) in the movement of the auto mounting on the mast tower (62) (Fig. 12).

The robotic arm (71) (Fig. 15) inside the structural displacement stretch (72) (Fig. 15) is assembled by means of penetrating an "L-shaped" structural piece (73), fixed with a pin (74) (Fig. 15). In order to carry out this task, the robotic arm displacement system (72) (Fig. 15) will be lowered down to the head of the base (69) (Fig. 12) of the scaffolding tower (60) (Fig. 12); the robotic arm (71) (Fig. 15) will be fitted in horizontal position and part of the robotic arm (75) (Fig. 15) is withdrawn where the basket was connected for works on the blades. Meanwhile, the crowns of the rotation system (76) (Fig. 15) of the robotic arm (71) (Fig. 15) are blocked and the automatic levelling cam system (77) (Fig. 15) is withdrawn, thereby resulting in the robotic arm (71) (Fig. 15) with the structural "L-shaped" piece (73) (Fig. 15) being successfully placed in parallel position and at an ideal height for carrying out the necessary works in the gondola (80) (Fig. 12) of the turbine.

In the upper portion of the structural "L-shaped" stretch (73) (Fig. 15) a gangway (78) (Fig. 15) is fitted for stepping on, formed by a light variable form metal structure, with railings (63) (Fig. 13) and safety skirtings (64) (Fig 13) and the various supports for installing the various cleaning systems (65) (Fig. 14), scanning systems (66) (Fig. 14) and photography systems (67) (Fig. 14) as well as general repair systems.

Moreover, the gangway (78) (Figs. 13 and 14) has a complementary gangway (79) (Figs. 13 and 14) which enables workers to walk from the same to the ring clamp with a gangway and vice versa. The gangway of the "L-shaped" robotic arm (73) (Fig. 15) has a number of joints and bracing (81) (Figs. 13 and 14), thereby achieving the maximum stability and safety thereof.

### Description of the drawings

In order to complement the present description, with the aim of facilitating a better understanding of the invention characteristics, in accordance with a preferred practical embodiment of the same, below is a set of drawings which form an integral part and non-limiting example thereof:
Figure 1: Repair/cleaning scaffolding tower for wind turbines.
Figure 2: Positioning of the base of the scaffolding tower at the foot of the turbine, with all of its components.
Figure 3: Positioning of the base of the scaffolding tower at the foot of the turbine, with elevation of the first stretch with all of its components.
Figure 4: Floor and front wing of the base of the scaffolding tower where the stretches composing the scaffolding tower are introduced.
Figure 5: Floor and front wing of the stretches of the scaffolding tower.
Figure 6: Structural displacement stretch seen from the front with robotic arm.
Figure 7: Structural displacement stretch in a right hand side view with robotic arm.
Figure 8: Structural displacement stretch in a plan view with robotic arm.
Figure 9: Plan view of the repair/cleaning scaffolding tower for wind turbines, with the position of the stretches of the basket when carrying out the various works on the blades.

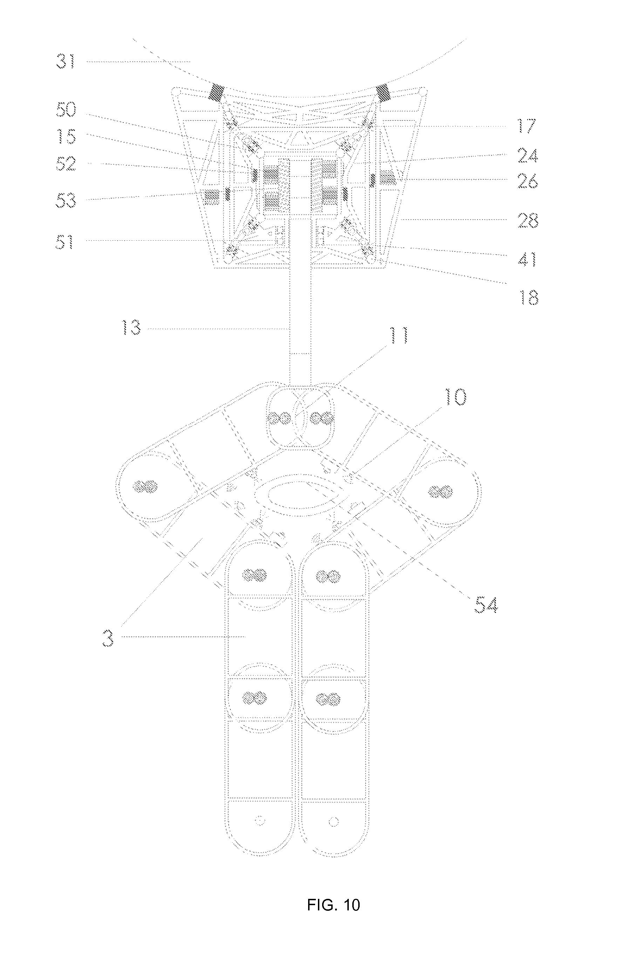

Figure 10: Plan view of the repair/cleaning scaffolding tower for wind turbines, with the position of the stretches of the basket when carrying out various works on the blades.
Figure 11: Plan view of the repair/cleaning scaffolding tower for wind turbines, with the various positions of the stretches that compose the basket, up to its total aperture.
Figure 12: Repair/cleaning scaffolding tower for wind turbines with new accessories built in: the ring clamp with a gangway, the robotic L-shaped arm with a gangway and the ring clamp without a gangway.
Figure 13: Elevation view of the position of the robotic arm with a gangway when carrying out the various works on the gondola and; elevation view of the position of the ring clamp with a gangway when carrying out the various works on the mast tower of the turbine.
Figure 14: Plan view of the position of the robotic arm with a gangway when carrying out the various works on the gondola and; plan view of the position of the ring clamp with a gangway when carrying out the various works on the mast tower of the turbine.
Figure 15: Structural displacement stretch seen in a right hand side view, with L-shaped robotic arm.

## Claims

1. Repair/cleaning tower for wind turbines, **characterised in that** it comprises the base (24) of the scaffolding tower (1), a structural displacement stretch (12) of the robotic arm (13), the robotic arm (13), the basket (11), the vents (32), the vent anchoring (33), rubberized wheels (29) and an electromagnet (30).
- Closed metal structure (39) base (24) with rounded corners (18) and with convex wheels (17) inside its structure, one side being open (40) in order to introduce the various stretches (19) of the scaffolding tower (1) with a closed metal structure (42) with rounded corners (45, 46) and convex wheels (47) inside the stretch, this having an open side (43), the ends being cylindrical (44) in form to allow the wheels (51) of the structural displacement stretch (12) to pass.
- Structural displacement stretch (12) which is moved inside the scaffolding tower (1) and is formed by the closed metal structure (48) having an open side (49) with rounded corners (50), a zip system (16), motors (15) and crowns (52). The open side (49) enables the robotic arm (13) to move.
- Robotic arm which consists of a crown of the rotation system (53) and an automatic levelling cam system (2).
- Basket (11) formed by a semi-automatic manual security system (10) for workers and the blades (54) and various stretches (3) with a metal structure coupled to one another, by means of conical bearings (4) and crowns for rotation (55) which are coupled in such a way that they are parallel to the blade. The stretches (3) have a gangway (5), safety elements (6) and the cleaning systems (7), scanning systems (8) and photography systems (9).
- Structural "L-shaped" piece (73) assembled by means of penetrating the robotic arm (71), which is inside the structural displacement stretch (72) and is secured by means of a pin (74).
- Gangway (78) for stepping on, fitted in the upper portion of the structural "L-shaped" stretch (73), formed by a light variable form metal structure, with railings (63), safety skirtings (64) and the various cleaning systems (65), scanning systems (66) and photography systems (67). The gangway (78) also has a complementary gangway (79) which facilitates access, from the same, to the ring clamp with a gangway and vice versa. The gangway of the robotic "L-shaped" arm (73) has a number of joints and bracing (81), thereby reaching the maximum stability and security of the same.
- Ring clamp with a gangway (56) formed by two symmetrical variable form metal structures with a number of joints and bracing (57). The structure has a number of rubberised wheels (58), in the upper and lower portions of the same, with a pneumatic system controlled by a pressure regulator (59), in order to achieve balance and stability in the scaffolding tower (60), as the auto mounting Is moved on the mast tower (62). The structure has a gangway (56) for stepping on, railings (63), safety skirtings (64) and the various cleaning systems (65), scanning systems (66) and photography systems (67).
- Ring clamp without a gangway (68) formed by two symmetrical variable form metal structures, which are coupled parallel to the perimeter of the mast tower (62) of the turbine, which are built into the upper portion of the base (69) and which, in a number of stretches (70) of the scaffolding tower (60) are necessary. The structure has a number of rubberised wheels (58) fitted in the upper and lower portions of the same. The wheels have a pneumatic system (59) controlled by a pressure regulator, in order to achieve balance and stability in the scaffolding tower (60) as the auto mounting is displaced on the mast tower (62).
